# EUROPEAN PATENT SPECIFICATION

(11) **EP 0 535 787 B1**
(45) Date of publication and mention of the grant of the patent: **08.01.1997**
(21) Application number: 92307064.3
(22) Date of filing: 03.08.1992
(51) Int. Cl.: G01L 7/04, G01L 9/12

(54) **Dual capacitor device for measurement purposes**
Dualkapazität-Vorrichtung zum Messzweck
Dispositif à double capacité à des fins de mesure

(30) Priority: 03.10.1991 US 770352
(43) Date of publication of application: 07.04.1993
(73) Proprietor: PANEX CORPORATION, Sugar Land Texas (US)
(72) Inventor: Delatorre, Leroy C., Sugar Land, Texas 77478 (US)
(74) Representative: Abbie, Andrew Kenneth

(56) References cited:
- EP-A- 0 108 894
- DE-A- 2 411 282
- GB-A- 2 221 311
- US-A- 3 662 595
- MEASUREMENT + CONTROL vol. 20, no. 9, November 1987, London, GB;pages 51 - 55,R.D. WORDEN:"Advanced design concepts for fused quartz pressure transducers."
- PATENT ABSTRACTS OF JAPAN vol. 9, no. 120 (P-358)(1843) 24 May 1985;& JP-A-60004837

## Description

This invention relates to capacitor devices and more particularly but not exclusively to capacitor devices having relatively small capacitors utilizing microdisplacements for use in high pressure transducers requiring a wide pressure range of operations under changing temperature conditions and for producing pressure measurements with a high degree of accuracy.

While the present invention finds particular usefulness in the oil industry, it has particular application in other hostile pressure and temperature environments where size of the transducer and accuracy of the measurements are important. In an oil well pressure transducer, it is common to size a unit to go into a small diameter metal pressure housing for measurement of pressures up to 20,000 psi (138 MPa) and even more and which can be subjected to downhole temperatures up to 400°F (204°C) or more. The pressure housing must have a wall thickness sufficient to withstand the downhole pressures so that the O.D. of the internal pressure transducer is in the neighborhood of one inch (2.54 cm).

A downhole oil well pressure gauge can be transported by a wireline, cable or pipe string to one or more levels of interest in a well bore where both temperature and pressure are sensed over a period of time. Typically, pressure measurements are repeatedly sampled and recorded over a period of time at a sampling rate determined by down hole electronics and may be scored in a downhole memory for sub-sequent replay or sent to the surface for analysis. Alternately, sometimes gauges are attached to production strings or other downhole equipment for extended periods of time or "permanently". In both uses of the gauge, sudden downhole pressure changes can also typically be accompanied by a temperature change in a relatively short period of time. It is also important for the accuracy of the pressure sensor to not change its calibration over a period of time in the borehole in response to pressure or temperature effects in the borehole. Thus, there is a need for a pressure gauge for high pressure measurements which is also insensitive to sudden changes in temperature or effects of pressure. The present invention relates to high pressure transducers which can accurately measure high pressure changes under transient temperature conditions independently of the temperature.

Under the combined effect of high temperature and pressure conditions, the typical pressure sensor, or transducer, structure is subjected to high stress by the applied high pressure and subjected to high temperature both of which cause creep in the materials of the sensor structure. Creep in materials tends to be exponentially related to both temperature and stress levels. The effect of creep or permanent deformation in materials is to alter the calibration or measurement characteristics of a sensor and cause the sensor to obtain inaccurate measurements from its calibration standard over a period of time.

Heretofore, capacitance type transducers have been utilized for pressure measurements where a downhole oil well pressure varies an electrical capacitance as a function of pressure. The pressure is translated to a capacitance measurement by a pressure diaphragm moving parallel arranged capacitance plates toward and away from one another. An example of this kind of device is shown in US-A-4 322 775.

A bourdon tube has been coupled to a capacitance type of sensor system as disclosed in US-A-4873870, in which sensor system the pressure in the bourdon tube generates a directional linear force to displace quartz supported parallel arranged capacitor elements toward and away from one another. While this device is satisfactory for a number of applications, it is a difficult unit to manufacture.

An article "Advanced design concepts for fused quartz pressure transducers" (Measurement and Control vol. 20 no. 9) by R D Worden, cited during substantive examination of the application, discloses the use of a bourdon tube in a fused quartz pressure transducer.

EP-A-108894, cited during substantive examination of the application, discloses a capacitor device comprising a first capacitance base member and a second capacitance base member respectively having capacitor surfaces, the capacitor surfaces of at least one of said capacitance base members being spaced apart, said capacitor surfaces of said second capacitance base member and capacitor surfaces of said first capacitance base member defining first and second capacitors, and the capacitor surfaces of the second capacitance base member being displaceable relative to the capacitor surfaces of the first capacitance base member for producing a dependant capacitance change in said first and second capacitors.

The present invention enables a capacitor device to be provided which has a relationship of capacitors that can be constructed from metals to respond to low force inputs and be relatively insensitive to temperature changes. An embodiment of the invention, described hereinafter, is particularly adaptable to measurement of high pressure with a high degree of accuracy and repeatability over a period of time.

The invention provides a capacitor device as defined in the last but one preceding paragraph characterised in that said second capacitance base member comprises torsion beam means disposed along a longitudinal displacement axis, a central section fixed relative to said first capacitance base member and an outer section connected to said central section by said torsion beam means; and a force means is coupled to said outer section of said second capacitance base member for causing an angular displacement of said outer section about said displacement axis and displacement of the capacitor surfaces of said second capacitance base member relative to the capacitor surfaces of said first capacitance base member to thereby produce said dependent capacitance change.

Preferably, said second capacitance base member has said spaced apart capacitor surfaces located on said outer section thereof to opposite sides of said displacement axis.

Preferably, the torsion beam means has a rectangular cross section with long and short dimensions relative to said displacement axis, outer surfaces of said torsion beam means are disposed parallel to said displacement axis and said long dimension, in the absence of a torque from said force means, is normal to said capacitor surfaces.

Preferably, said force means comprises a spirally wound bourdon tube having a coil axis which is aligned with said displacement axis.

Preferably, said torsion beam means, said central section and said outer section are integral portions of said second capacitance base member and are defined by parallel walled slot means thereof.

Preferably, said torsion beam means comprises first and second torsion beam members.

The torsion beam means may be constructed from a high strength metal material having good elastic characteristics and said force means may be constructed and arranged for developing a torque which does not cause a plastic strain greater than 0.01% to 0.0001% in said torsion beam means.

The torsion beam means may be constructed from a high strength metal material having good elastic characteristics and the working stress levels in said torsion beam means may be less than the stress necessary to cause a plastic strain of 0.2% in said torsion beam means.

The torsion beam means may be constructed from a material having good elastic characteristics and the working stress levels in the torsion beam means may be less than the stress necessary to cause a plastic strain of 0.01% to 0.0001% in the torsion beam means.

The torsion beam means may be constructed from a high strength metal having good elastic characteristics within the stress range experienced by the torsion beam means.

The force means may be a bourdon tube arranged with two turns about a coil axis for developing a torque which does not cause a plastic strain greater than 0.01% to 0.0001% in the torsion beam means.

The invention also includes a method of providing a measure of a fluid pressure using a capacitor device which has a first capacitance base member and a second capacitance base member respectively having capacitor surfaces, the capacitor surfaces of at least one of said capacitance base members being located on opposite sides relative to a central transverse plane and said capacitor surfaces defining first and second capacitors having first and second capacitance gaps, the second capacitance base member having a central section fixed relative to said first capacitance base member and an outer section connected to metal torsion beam means connected to said central section such that said outer section can be angularly displaced relative to said first capacitance base member, said torsion beam means being disposed along a displacement axis, the second capacitance base member being coupled to a bourdon tube wound in a coil about a coil axis which aligns with the displacement axis, and said capacitor surfaces of said second capacitance base member being located on said outer section; said method comprising the steps of:
torquing said outer section of said second capacitance base member relative to said first capacitance base member about said displacement axis by applying a fluid pressure to said bourdon tube and developing a torque about said displacement axis and an angular displacement of said outer section about said displacement axis in response to said pressure, thereby producing a dependent change in said capacitance gaps of said first and second capacitors; and
maintaining the torque below the yield point of the torsion beam means to minimize permanent distortion in said torsion beam means.

The torque may be maintained below that necessary to cause a plastic strain of 0.2% in the torsion beam means.

The torque may be maintained below that necessary to cause a plastic strain of 0.01% to 0.0001% in the torsion beam means.

In order that the invention may be well understood, an embodiment thereof, which is given by way of example only, will now be described with reference to the accompanying drawings, in which:
Figure 1 shows an arrangement typical of an oil well pressure measuring device as found in current use;
FIG. 2 is a schematic illustration of an operating concept for descriptive purposes;
FIG. 3 is a schematic view in perspective of a structural relationship illustrating the concept;
FIG. 4 is a schematic view in perspective of a capacitor device embodying the invention;
FIG. 5 is a view in longitudinal cross section through a vertical central axis of the capacitor device;
FIG. 6 is a detailed view of a face of a capacitance base member of the capacitor device;
FIG. 7 is a detailed view of a face of another capacitance base member of the capacitor device; and
FIG. 8 is a view illustrating a bourdon tube of the capacitor device.

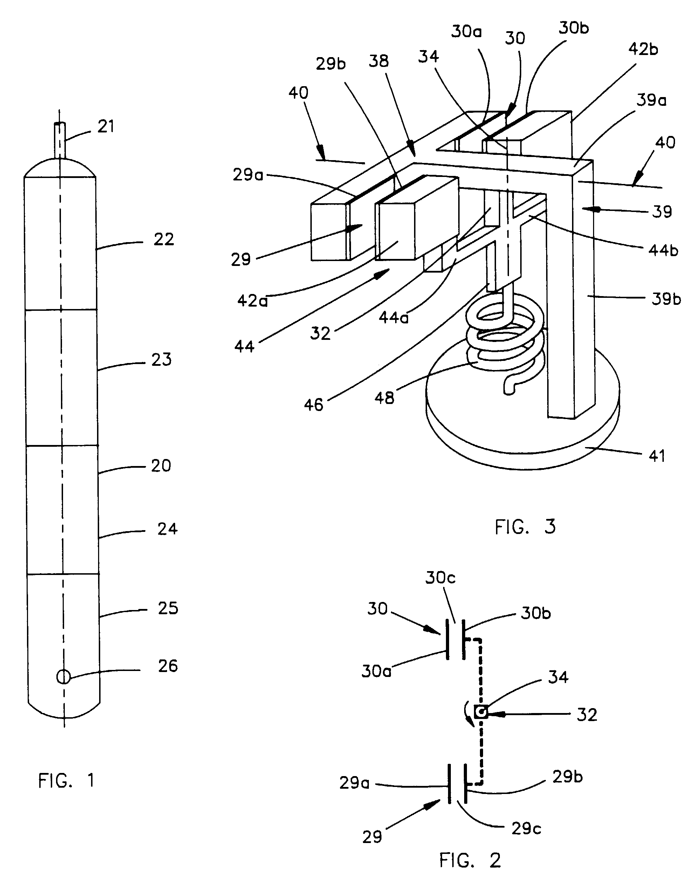

By way of background, as shown in FIG. 1, a downhole cylindrically shaped well tool 20 is sized for insertion through a small diameter well tubing and adapted for coupling to the end of a wireline cable 21. The cable 21 extends to a surface located spooling reel or drum (not shown). The tool 20 generally includes a DC battery pack section 22, as a source of electrical power, an electronic section 23 with electrical circuitry for electrically processing and for providing electrical power, a temperature sensor section 24 with a temperature probe for sensing temperature and a pressure sensor section 25 with a pressure sensor or transducer for sensing pressure. An opening 26 admits fluid under pressure to the pressure sensor or the transducer in the sensor section 25. For further reference purposes, see US-A-4 763 259.

In permanent gauge installations the temperature and pressure sensor sections 24, 25 are incorporated with downhole equipment for permanent position or location in a well bore.

Referring now to FIG. 2 and FIG. 3, an operating concept is schematically (but disproportionally) illustrated for descriptive purposes. In FIG. 2, separate electrical capacitors 29,30 are illustrated. The capacitor 29 has parallel capacitor plates 29a,29b which are separated by a capacitance gap 29C. The capacitor 30 has parallel capacitor plates 30a,30b which are separated by a capacitance gap 30C. The plates 29a,30a are fixed and in a common plane transverse to the plane of the drawing and the plates 29b,30b are in another parallel, common plane. The plates 29b,30b are attached (see dashed line) to a torsion beam means 32. The beam means 32 has a torque axis 34 in a transverse plane and can be torqued about its axis 34 to deflect the plates 29b and 30b and dependently alter the capacitance of the capacitors 29,30.

As shown schematically in more detail in FIG. 3, the capacitor plates 29a,30a are on a fixed base member 38 and are located equidistant from a central horizontal axis 40. A support means 39 with a horizontal extension 39a and a vertical extension 39b is fixed to a lower base member 41.

The capacitor plates 29b and 30b are located on elements 42a,42b of a base member 44. The elements 42a,42b are connected by horizontal extensions 44a,44b to a vertical torque coupling element 46 and are connected by a vertical torsion beam element 32 to the support means 39. The torque coupling element 46 is connected to the stub or closed end of a spirally wound bourdon tube 48. The open end of the bourdon tube 48 passes through the base member 41 and is attached thereto. The axis 34 of the torsion beam element 32 and the coil axis of the bourdon tube 48 are aligned on a common vertical axis and intersect the horizontal axis 40. The axes 34 and 40 define a vertical plane.

It can be appreciated that the structure shown in Fig. 3 is arranged so that an applied pressure in the bourdon tube causes the bourdon tube to develop a torque which is applied to the beam element 32 so that the places 29b and 30b are angularly displaced about the vertical displacement axis 34 and dependently change the capacitor gaps 29c,30c. Thus, separate capacitors 29, 30 respectively utilizing the capacitance plates 29a,29b and 30a,30b will have dependently related capacitance changes in response to rotative displacement. As will be discussed herein, the displacement is in microdimensions which reduces the stress in the torsion beam element 32.

From the foregoing concept it can be appreciated that a bourdon tube 48 is utilized to develop a low torque in response to high pressure which acts on a torsion beam member 32 about a vertical displacement axis 34 and produces a micro dimensional deflection of capacitor plates 29b, 30b. By maintaining the amount of deflection within the micro-elastic characteristics of the material for the beam member 32 and utilizing low torques, the stress levels in the beam member 32 can be kept low which permits high accuracy and repeatable measurements. The high accuracy measurements are obtainable because permanent distortion of the material does not appreciably occur and consequently does not affect the measurements. Material criterion for the torsion beam element 32 is that the material should have a micro yield and micro creep point which is above the stress level produced by the torque.

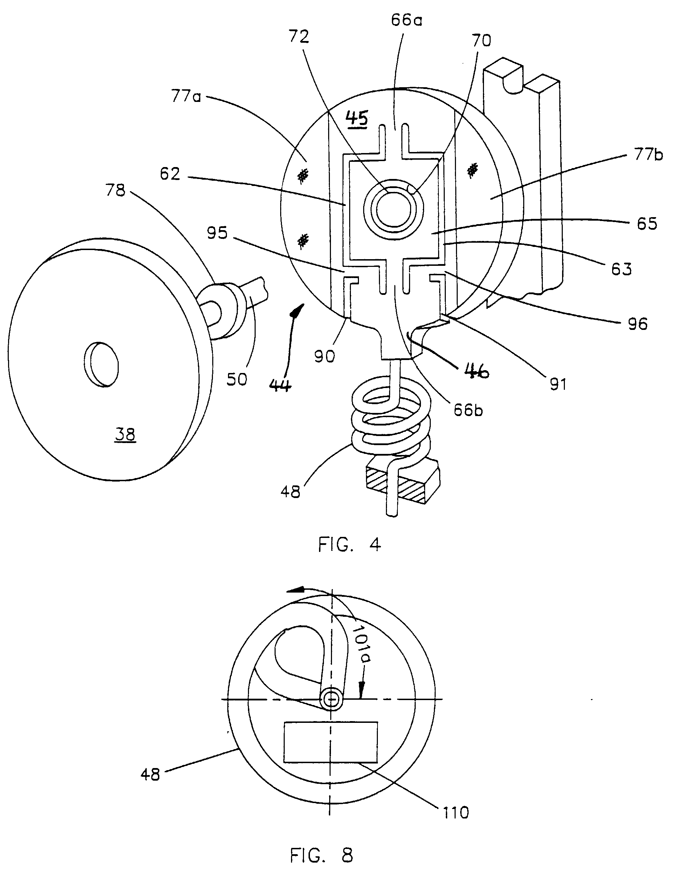

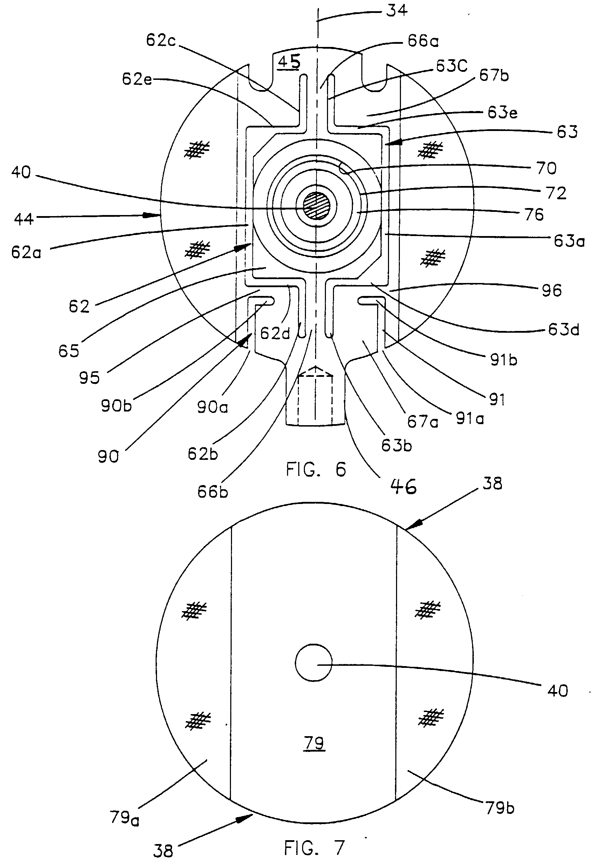

Referring now to FIGS. 4, 5 and 6, the capacitor device illustrated therein, which is an embodiment of the invention, includes an elongate, cylindrically shaped central fastener rod 50 with a central longitudinal axis 40 which is shown in a horizontal position. The axis 40 is normal to the planes of capacitor surfaces, or plates, 77a, 77b and 79a, 79b. The rod 50 is part of a support means and couples a first vertical capacitance, or capacitor plate, base member 38 to a fixed central section 65 (see FIGS. 4 and 6) of a second vertical capacitance, or capacitor plate, base member 44. The first capacitance base member 38 is cylindrically shaped and is made of a material having inherently dimensionally stable characteristics under changing environmental conditions such as temperature and time aging. Quartz is a suitable material.

As shown in FIG. 4 and FIG. 6, the second capacitance base member 44 is a cylindrically shaped metal plate member which has a first slot system comprising first slots 62,63 which are defined by spaced apart wall surfaces and which are tortuously located in the body of the second capacitance base member 44. The first slots provide the central section 65 which is connected by torsion beam means comprising spaced apart torsion beam members, or sections, 66a, 66b to an outer section 45 including outer plate portions 67a,67b (see FIG. 6). The torsion beam members, or beams, 66a, 66b are rectangular in cross section with a narrow dimension in the plane of the drawing (FIG. 6) and a long dimension in a transverse plane. The beam members 66a,66b are adapted to be torqued about a central vertical torque or displacement axis 34 where the torque or displacement axis 34 is located centrally of the beam members 66a,66b and on a vertical median plane extending through the second capacitance base member 44. The displacement axis 34 also intersects the horizontal axis 40 and defines the vertical plane. The displacement axis 34 is parallel to the parallel planes in which the capacitor plates 77a, 77b, 79a, 79b are located.

The central section 65 is a generally rectangularly shaped member defined between the slots 62 and 63 which are symmetrically arranged with respect to the central displacement axis 34. The outer section 45 of the second capacitance base member 44 is attached by the torsion beam members 66a,6b to the central section 65 along the central axis 34. Also along the central axis is a torque coupling element 46 (see FIG. 6).

As shown in FIG. 6, the slot 62 has a central vertically walled portion 62a connected to parallel arranged wall end portions 62b and 62c by transversely arranged wall slot portions 62d and 62e. The other slot 63 has similarly arranged portions 63a,63b,63c,63d and 63e. The spacing between the end portions 62b,63b and 62c,63c of the slots 62 and 63 defines the narrow width dimension of the beam members 66a and 66b. The length of the slot portions 62b,63b and 62c,63c also defines the length of the beam members 66a and 66b.

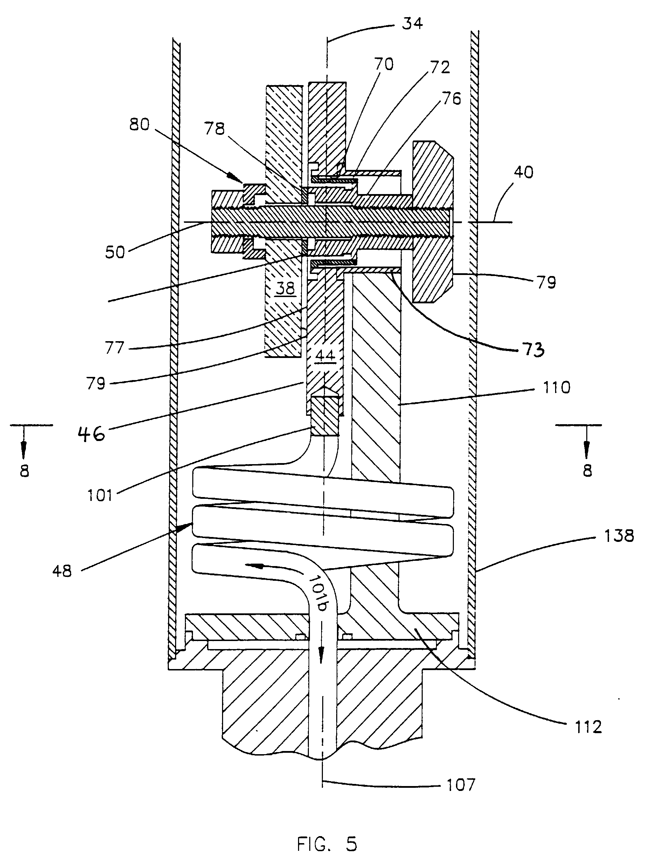

Referring to FIG. 5, in the center of the central section 65 and the second capacitance base member 44 is a mounting bore 70 which is centered on the horizontal axis 40. The bore 70 receives an annular outer tubular support ring 72. The outer support ring 72 is welded about its periphery at its end surface to the central section 65. Disposed within the outer support ring 72 (see FIG. 5) is an annular inner tubular support member 76.

An inwardly facing planar surface 77 of the outer section 45 of the second capacitance base member 44 is on the same vertical plane as an inwardly facing surface 77a of the central section 65. A facing surface 79 of the first capacitance base member 38 is parallel to the surface 77 of the second capacitance base member 44. Between the inner support member 76 in the second capacitance base member 44 and the first capacitance base member 38 is a disc shaped spacer member 78. The spacer member 78 effectively defines the capacitance gap for the capacitor plates 79a, 79b, 77a, 77b on the surfaces 79 and 77.

The rod 50 is threadedly attached to the support member 76 and extends through a centrally located opening on the first capacitance base member 44. A clamping means 80 threadedly attaches to the rod 50 so that the first and second capacitance base members 38 and 44 are assembled in a unitary assembly. A portion of the rod 50 extends outwardly of the support member 76 and is threadedly attached and welded to a balance mass 79. The balance mass 79 overcomes gravity effects when the device is in a horizontal position. The spacer member 78, the rod 50, the clamping means 80, and the support member 76 can be made from a material which is selected to have similar temperature expansion characteristics to the selected material for the first capacitance base member 38. A metal material such as Invar is suitable. The second capacitance base member 44 is made from a high strength material, such as a maraging stainless steel with good elastic characteristics for the torsion beam members 66a, 66b. The steel base member 44 also will provide an electrical ground for the capacitors' electrical system. By way of illustration, the coefficient of expansion for various materials averages (at room temperature) as follows:

| | |
|---|---|
| Invar | 0.2 parts/million/°F (0.36 x 10⁻⁶/°C) |
| Maraging | 6 parts/million/°F (10.80 x 10⁻⁶/°C) |
| Quartz | 0.3 parts/million/°F (0.54 x 10⁻⁶/°C) |

The first capacitance base member 38, as noted before, is a cylindrically shaped member preferably constructed from a quartz material and has first and second independent capacitor surfaces, or capacitance place films, 79a and 79b (see FIG. 7) which are sputtered in separate locations onto the surface 79 of the first capacitance base member 38. The capacitance plate film 79a is arranged in spacial alignment with the planar surface 77 of the second capacitance base member 44. Connection is made to the edge of the quartz first capacitance base member 38. Electrical wire conductors are then connectable to each capacitor film plate 79a, 79b for separate capacitor measurements. On the surface 77, facing capacitor surfaces, or capacitance place films 77a,77b (see FIG. 4) are provided, if desired, or the metal can be used as a ground surface in a grounded electrical capacitance system.

As shown in FIG. 5, the planar surface 79 on the first base member 38 is usually arranged parallel to the planar surface 77 on the second capacitance base member 44 and is usually separated therefrom by a capacitor spacing distance or gap. The capacitance plate films 79a and 79b which are off-set from the central horizontal axis 40 (see FIG. 7) and from the vertical plane through the displacement axis 34 are similarly spaced parallel to the planar surface 77 on the second capacitance base member 44. The widths of the capacitor gaps between the respective plate films 79a,79b and the surface 77 is basically defined by the width of the spacer member 78. It can thus be appreciated that the clamping means 80 on the fastener rod 50 attach the first capacitance base member 38 to the inner support ring 76 and, in turn, to the central section 65 of the second capacitance base member 44.

Referring again to FIGS. 4 and 6, the second capacitance base member 44 is also provided with a second vertical wall slot system comprised of angular "L" shaped slots 90 and 91 which are symmetrically arranged with respect to the axis 34. The sidewalls of a slot portion 90a of slot 90 align with the sidewalls of the slot portion 62a of the slot 62. The sidewalls of a slot portion 91a of the slot 91 align in vertical planes with the sidewalls of the slot portion 63a of the slot 63. The sidewalls of slot portions 90b and 91b of the slots 90,91 are aligned in horizontal planes with one another and are perpendicularly arranged relative to the displacement axis 34. It can be seen that the slot portions 90b and the slot portions 91b, respectively, define transverse beam portions 95,96 disposed along an axis perpendicular to the displacement axis 34. The purpose of this arrangement is to minimize temperature effects by providing an equal and accurately controlled condition path to each capacitance side.

The torquing of the beam members 66a,66b on the central section 65 of the second capacitance base member 44 is accomplished by a spirally wound bourdon tube 48 (FIGS 4 & 5). The bourdon tube 48 has a closed stub end 101 (FIG. 5) which is aligned with the displacement axis 34 and is attached to the torque coupling element 46 of the second capacitance base member 44. The spirally wound bourdon tube 48 has a central vertical coil axis 107, which aligns with the displacement axis 34. When the bourdon tube 48 is subjected to internal pressure it will produce a torque about the axis 34 and the axis 107.

The assembly of the first and second capacitance base members 38 and 44 is supported on a vertical support member 110 and a mounting beam 73 is welded to the support member 110. The support member 110 is attached to a cylindrically shaped reference base member or portion, 112 which couples to a pressure inlet. The open end of the bourdon tube 48 extends through an opening in the reference base member 112. The tube 48 is welded to the reference base member 112 so that the bourdon tube 48 is fixed in position between the reference base member 112 and the second capacitance base member 44.

As may be appreciated from FIGS. 5 and 7, the first capacitance base member 38 and the support member 110 constitute a first expansion unit assembly and the second capacitance base member 44, and the bourdon tube 48 constitute a second expansion unit assembly. Temperature changes produce equal displacement of the second expansion unit assembly relative to the first expansion unit assembly and compensate for changes in dimensions due to temperature. Even if not exactly equal the difference in displacement is absorbed by the coil of the bourdon tube 48 without producing a significant torque effect. In practice, a metal cylindrical enclosure, or pressure, housing 138 encloses the capacitors in a vacuum or contains inert gas.

One of the features of the capacitor device of Figures 4 to 8 is the arrangement which enables use of micro-elastic characteristics of metals. The macro yield point of a metal is defined as the point where the metal has a set or plastic strain (permanent deformation) of 0.2% or two parts per thousand. The micro yield point of a metal is defined as the point where the metal has a set in a range of 0.01% to 0.0001% or one part per ten thousand to one part per million. In utilizing micro-elastic characteristics a low or small force produces a small deflection. As an example, a 0.3 inch pound (0.034 Nm) torque is used to produce a second capacitance base member 44 deflection of 0.001 radians. This arrangement permits measurement of high pressure 10,000 - 15,000 psi (69-103.5 MPa) or more by utilizing the bourdon tube 48 coupled to the second capacitance base member 44. The capacitor device utilizes a relatively small deflection so that the primary determining element is the torsion beam members 66a, 66b which have very low stress levels. The bourdon tube 48 operates in an essentially constrained mode as a pressure to force converter. Additionally since the stress levels in the torsion beam members 66a, 66b are in the micro-elastic range, the elastic characteristics of the torsion beam members 66a, 66b can approach nearly ideal performance. Ideal performance is approached by the diminishing effect of hysteresis creep, and non-linear response as stress levels are reduced.

The stress levels in obtaining micro-elastic characteristics are low because the deflection required for the capacitor sensor can be small, for example 0.001 radians. The torsion beam members 66a, 66b providing the displacement axis 34 are relatively stiff or rigid and the torque force applied is low, for example 0.3 inch pounds (0.034Nm).

By way of example, in the capacitor device of Figs. 4 to 8 the diameter of the first capacitance base member 38 is about 0.850 inches (2.2cm). The diameter of the second capacitance base member 44 is about 0.900 inches (2.3cm) and it is about 0.125 inches (0.3cm) thick. The width of the slots 62, 63, 90, 91 is about 0.020 inches (0.05cm). The spacer 78 is 0.001 inches (0.0025cm) thick.

While the capacitor device of Figs 4 to 8 exploits micro yield characteristics to produce accuracy and repeatability, macro yield characteristics may be suitable for some applications.

A bourdon tube as contrasted to a circular tube has a flattened or ovular cross section as compared to a circular cross section. In high pressure applications a flat oval cross section is commonly employed. In a flattened cross section, internal pressure produces higher stress in the wall because the member tends to move toward a circular cross sectional form. When a tube member with a flattened cross section is spirally wound, internal pressure tends to uncurl the spiral. The flatness of a tube, the coil diameter and the wall thickness also have a bearing on the stress.

In the capacitor device of Figs 4 to 8, the spiral closed end 101 of the spirally wound bourdon tube 48 is connected to the metal second capacitance base member 44 which is constructed to enable torsional deflection of the beam members 66a, 66b as a function of the applied pressure in the bourdon tube 48. There may be two complete turns of the bourdon tube 48 which are flat in cross section disposed between circular end pieces 101a,101b. It is preferable to have an even number of turns in the bourdon tube 48. Bourdon tube design is well known, and the design should minimize the stress in the bourdon tube 48 to develop a low torque for the torsion beam members 66a, 66b. There is zero force on the capacitor plates 77a, 77b, 79a, 79b. In short, the capacitor plates 77a, 77b, 79a, 79b are moved relative to one another by angular deflection of the second capacitance base member 44. Because the torque of the bourdon tube 48 is small, the stress level in the torsion beam members 66a, 66b can be kept low. The use of high performance metal alloys can then provide near perfect elastic and stability characteristics of the torsion beam members 66a, 66b.

The effect of temperature on the torque output of the bourdon tube 48 is minimized because the differences in linear expansion produce a very small corresponding change in torque and the capacitor device significantly rejects any displacement other than that caused by torque.

Temperature can also affect the capacitor device. The first capacitance base member 38 of the capacitor device is preferably of a low expansion material which is dimensionally stable, such as quartz. The second capacitance base member 44 is preferably made of the same material as the torsion beam members 66a, 66b to avoid welds.

The capacitor plates 77a, 77b, 79a, 79b are respectively mounted by aligned connections to one of the capacitance base members 38, 44 which, in turn, are attached to another mass 110. Since the structure is mounted in a vacuum, temperature change of the capacitor plates 77a, 77b, 79a, 79b is affected primarily by thermal conduction through the mountings.

The electronics used for the capacitor device of Figures 4 to 8 is the same as described in US-A-4091693. A ratio metric measurement is made using the relationship (C₁ - C₂)/(C₁ + C₂) so that the oscillator factor cancels out of the reading. One of the important features of the capacitor device shown in Figures 4 to 8 is that the capacitor device can operate with minute deflection changes and produce measurable signals.

It will be apparent from the foregoing that, in the capacitor device of Figures 4 to 8, dual capacitors are defined by spaced apart capacitor plates 77a, 77b, 79a, 79b respectively located on capacitance base members 38, 44. The capacitance base members 38, 44 are vertically arranged in the pressure housing 138. The capacitor plates 77a, 77b, 79a, 79b for each capacitor are disposed at equally offset locations relative to the central vertical plane for the device so that a capacitor is located on either side of the vertical plane. The outer section 45 of the capacitance base member 44 can be angularly displaced about the vertical displacement axis 34 by an applied torque to dependently vary the respective capacitances of the capacitors. The angular displacement is obtained by the spirally wound bourdon tube 48 which, when subjected to internal fluid pressure, produces a torque about the displacement axis 34. The displacement axis 34 is centrally located relative to the angularly displaceable section 45 of the second capacitance base member 44.

The bourdon tube 48 is attached to the displaceable section 45 of the second capacitance base member 44 and to the reference base member 112 and provides a torque to the torsion beams 66a, 66b in the second capacitance base member 44. Although the bourdon tube 48 can be subjected to high pressures, the stress levels in the metal bourdon tube 48 can be designed to be well within its elastic limits because only a low force is required to obtain a micro displacement of the torsion beams 66a, 66b and the displaceable section 45 of the second capacitance base member 44 in micro measurements. Micro displacements of the capacitor surfaces 77a, 77b are easily measured. Thus, creep and permanent distortion in the materials, which are caused by stress, are minimized in the system. Further, the effect of bourdon tube creep is reduced by the constraining effect of the torque beams 66a, 66b.

By arranging the capacitance base members 38, 44 so that related capacitances between the capacitor plates 77a, 77b and 79a, 79b are varied as a function of an angular relationship of the capacitor plates 77a, 77b relative to the mid-plane, a high capacitance sensitivity can be obtained with low angular deflection. That is, a micro dimensional change in the capacitor gap produces a defined measurement parameter. The high sensitivity is obtained by measurement of a small displacement of the capacitor plates 77a, 77b at a significant distance from the center of angular displacement (the displacement axis 34). The elastic characteristics of the metal torsion beam means 66a, 66b coupled to the force end of the spirally wound bourdon tube 48 by the torque coupling element 46 become a primary determining element relative to elastic properties.

The reason that the torsion beam means 66a, 66b is a primary determining element is that the deflection of the bourdon tube 48 is restrained by the torsion beam means 66a, 66b to be a small fraction of the unrestrained deflection of the bourdon tube 48. Thus, the deflection of the bourdon tube 48 is controlled by the elastic characteristics of the torsion beam means 66a, 66b and the bourdon tube 48 becomes essentially a pressure to force converter. By using the low driving torque of the bourdon tube 48 (even for high pressure) and the minute angular deflection of the torsion beam means 66a, 66b, the stress levels in the bourdon tube 48 and particularly in the torsion beam mans 66a, 66b can be kept well within micro-elastic limits. High performance metal alloys can be used to provide correspondingly high micro yield values so that near perfect elastic characteristics are attainable in the operating range of the capacitor device.

Temperature is an important factor because it can affect the calibration of the capacitor device. While a pressure measuring device at an ambient temperature can be generally corrected by measured temperature, a change of temperature from an ambient value can thermally affect the response of a pressure measuring device to pressure which affects the accuracy of the pressure measurement. Changes in temperature often occur with changes in pressure so it is important for accurate pressure measurement for a pressure measuring device to be insensitive to changing or varying temperatures or to compensate for the changing temperatures.

In the capacitor device of Figures 4 to 8, the spirally wound bourdon tube 48 is arranged with its coil axis aligned with the vertical displacement axis 34. With the vertical support alignment, temperature does not significantly affect the capacitor relationship.

It will be apparent to those skilled in the art that various changes may be made to the capacitor device of Figures 4 to 8 without departing from the scope of the claims.

## Claims

1. A capacitor device comprising:
a first capacitance base member (38) and a second capacitance base member (44) respectively having capacitor surfaces (79a, 79b and 77a, 77b), the capacitor surfaces of at least one of said capacitance base members (38, 44) being spaced apart, said capacitor surfaces (77a, 77b) of said second capacitance base member (44) and capacitor surfaces (79a, 79b) of said first capacitance base member (38) defining first and second capacitors (77a, 79a and 77b, 79b), and the capacitor surfaces (77a, 77b) of the second capacitance base member (44) being displaceable relative to the capacitor surfaces (79a, 79b) of the first capacitance base member (38) for producing a dependant capacitance change in said first and second capacitors; characterised in that
said second capacitance base member (44) comprises torsion beam means (66a, 66b) disposed along a longitudinal displacement axis (34), a central section (65) fixed relative to said first capacitance base member (38) and an outer section (45) connected to said central section (65) by said torsion beam means; and
a force means (48) is coupled to said outer section (45) of said second capacitance base member (44) for causing an angular displacement of said outer section (45) about said displacement axis (34) and displacement of the capacitor surfaces (77a, 77b) of said second capacitance base member (44) relative to the capacitor surfaces (79a, 79b) of said first capacitance base member (38) to thereby produce said dependent capacitance change.

2. A capacitor device as set forth in claim 1 wherein said second capacitance base member (44) has said spaced apart capacitor surfaces (77a, 77b) located on said outer section (45) thereof to opposite sides of said displacement axis (34).

3. A capacitor device as set forth in claim 1 or 2 wherein the torsion beam means (66a, 66b) has a rectangular cross section with long and short dimensions relative to said displacement axis (34), and wherein outer surfaces of said torsion beam means are disposed parallel to said displacement axis and wherein said long dimension, in the absence of a torque from said force means (48), is normal to said capacitor surfaces.

4. A capacitor device as set forth in claim 1, 2 or 3 wherein said force means comprises a spirally wound bourdon tube (48) having a coil axis (107) which is aligned with said displacement axis (34).

5. A capacitor device as set forth in any one of the preceding claims wherein said torsion beam means (66a, 66b), said central section (65) and said outer section (45) are integral portions of said second capacitance base member (44) and are defined by parallel walled slot means (62, 63) thereof.

6. A capacitor device as set forth in any one of the preceding claims wherein said torsion beam means comprises first and second torsion beam members (66a, 66b).

7. A capacitor device as set forth in any one of the preceding claims wherein the torsion beam means (66a, 66b) is constructed from a high strength metal material having good elastic characteristics and wherein said force means (48) is constructed and arranged for developing a torque which does not cause a plastic strain greater than 0.01% to 0.0001% in said torsion beam means.

8. A capacitor device as set forth in any one of claims 1 to 6, wherein the torsion beam means (66a, 66b) is constructed from a high strength metal material having good elastic characteristics and the working stress levels in said torsion beam means are less than the stress necessary to cause a plastic strain of 0.2% in said torsion beam means.

9. A capacitor device as set forth in any one of claims 1 to 6, wherein the torsion beam means (66a, 66b) is constructed from a material having good elastic characteristics and the working stress levels in the torsion beam means are less than the stress necessary to cause a plastic strain of 0.01% to 0.0001% in the torsion beam means.

10. A capacitor device as set forth in any one of claims 1 to 6, wherein the torsion beam means (66a, 66b) is constructed from a high strength metal having good elastic characteristics within the stress range experienced by the torsion beam means.

11. A capacitor device as set forth in claim 1, 2 or 3 wherein the force means is a bourdon tube (48) arranged with two turns about a coil axis for developing a torque which does not cause a plastic strain greater than 0.01% to 0.0001% in the torsion beam means (66a, 66b).

12. A method of providing a measure of a fluid pressure using a capacitor device which has a first capacitance base member (38) and a second capacitance base member (44) respectively having capacitor surfaces (79a, 79b and 77a, 77b), the capacitor surfaces of at least one of said capacitance base members (38, 44) being located on opposite sides relative to a central transverse plane and said capacitor surfaces defining first and second capacitors (77a, 79a and 77b, 79b) having first and second capacitance gaps, the second capacitance base member (44) having a central section (65) fixed relative to said first capacitance base member and an outer section (45) connected to metal torsion beam means (66a, 66b) connected to said central section (65) such that said outer section (45) can be angularly displaced relative to said first capacitance base member (38), said torsion beam means being disposed along a displacement axis (34), the second capacitance base member being coupled to a bourdon tube (48) wound in a coil about a coil axis (107) which aligns with the displacement axis (34), and said capacitor surfaces (77a, 77b) of said second capacitance base member being located on said outer section (45); said method comprising the steps of:
torquing said outer section (45) of said second capacitance base member (44) relative to said first capacitance base member (38) about said displacement axis (34) by applying a fluid pressure to said bourdon tube (48) and developing a torque about said displacement axis (34) and an angular displacement of said outer section (45) about said displacement axis in response to said pressure, thereby producing a dependent change in said capacitance gaps of said first and second capacitors; and
maintaining the torque below the yield point of the torsion beam means to minimize permanent distortion in said torsion beam means.

13. A method of measuring capacitance in a capacitor device as set forth in claim 12, wherein the torque is maintained below that necessary to cause a plastic strain of 0.2% in the torsion beam means.

14. A method of measuring capacitance in a capacitor device as set forth in claim 12 or 13 wherein the torque is maintained below that necessary to cause a plastic strain of 0.01% to 0.0001% in the torsion beam means.

## Patentansprüche

1. Kondensatorvorrichtung mit:
einem ersten kapazitiven Basisteil (38) und einem zweiten kapazitiven Basisteil (44), die jeweils Kondensatorflächen (79a, 79b und 77a, 77b) aufweisen, wobei die Kondensatorflächen von zumindest einem der kapazitiven Basisteile (38, 44) voneinander beabstandet sind, wobei die Kondensatorflächen (77a, 77b) des zweiten kapazitiven Basisteils (44) und die Kondensatorflächen (79a, 79b) des ersten kapazitiven Basisteils (38) einen ersten und zweiten Kondensator (77a, 79a und 77b, 79b) definieren, und die Kondensatorflächen (77a, 77b) des zweiten kapazitiven Basisteils (44) relativ zu den Kondensatorflächen (79a, 79b) des ersten kapazitiven Basisteils (38) zum Erzeugen einer abhängigen Kapazitätsänderung im ersten und zweiten Kondensator verlagerbar sind, dadurch gekennzeichnet, daß
das zweite kapazitive Basisteil (44) eine Torsionsträgereinrichtung (66a, 66b), welche entlang einer sich längserstreckenden Verlagerungsachse (34) angeordnet ist, einen zentralen Bereich (65), der relativ zum ersten kapazitiven Basisteil (38) befestigt ist, und einen äußeren Bereich (45) aufweist, der mit dem zentralen Bereich (65) durch die Torsionsträgereinrichtung verbunden ist; und
eine Spanneinrichtung (48) an den äußeren Bereich (45) des zweiten kapazitiven Basisteiles (44) zum Bewirken einer Winkelabweichung des äußeren Bereichs (45) um die Verlagerungsachse (34) und einer Verlagerung der Kondensatorflächen (77a, 77b) des zweiten kapazitiven Basisteiles (44) bezüglich den Kondensatorflächen (79a, 79b) des ersten kapazitiven Basisteiles (38) gekoppelt ist, um dadurch die abhängige Kapazitätsänderung zu erzeugen.

2. Kondensatorvorrichung nach Anspruch 1, wobei das zweite kapazitive Basisteil (44) die voneinander beabstandeten Kondensatorflächen (77a, 77b) an seinem äußeren Bereich (45) auf gegenüberliegenden Seiten der Verlagerungsachse (34) angeordnet hat.

3. Kondensatorvorrichtung nach Anspruch 1 oder 2, wobei die Torsionsträgereinrichtung (66a, 66b) einen rechteckigen Querschnitt mit langen und kurzen Abmessungen bezüglich der Verlagerungsachse (34) aufweist, und wobei äußere Oberflächen der Torsionsträgereinrichtung parallel zur Verlagerungsachse angeordnet sind, und wobei die Längenabmessung bei Abwesenheit eines Drehmoments von der Spanneinrichtung (48) senkrecht zu den Kondensatorflächen ist.

4. Kondensatorvorrichtung nach Anspruch 1, 2 oder 3, wobei die Spanneinrichtung eine spiralförmig gewundene bourdonsche Röhre (48) mit einer Wicklungsachse (107) enthält, welche fluchtend zur Verlagerungsachse (34) ist.

5. Kondensatorvorrichtung nach einem der vorangegangenen Ansprüche, wobei die Torsionsträgereinrichtung (66a, 66b), der zentrale Bereich (65) und der äußere Bereich (45) einstückige Abschnitte des zweiten kapazitiven Basisteiles (44) sind und durch eine daran ausgebildete parallelwandige Schlitzeinrichtung (62, 63) definiert werden.

6. Kondensatorvorrichtung nach einem der vorangegangenen Ansprüche, wobei die Torsionsträgereinrichtung erste und zweite Torsionträgerteile (66a, 66b) enthält.

7. Kondensatorvorrichtung nach einem der vorangegangenen Ansprüche, wobei die Torsionsträgereinrichtung (66a, 66b) aus einem hochfesten metallischen Material mit guter elastischer Charakteristik ausgebildet ist, und wobei die Spanneinrichtung (48) zum Entwickeln eines Drehmoments ausgebildet und angeordnet ist, welches keine plastische Verformung größer als 0,01% bis 0,0001% in der Torsionsträgereinrichtung hervorruft.

8. Kondensatorvorrichtung nach einem der Ansprüche 1 bis 6, wobei die Torsionsträgereinrichtung (66a, 66b) aus einem hochfesten metallischen Material mit guter elastischer Charakteristik ausgebildet ist und die Beanspruchungsniveaus der Torsionsträgereinrichtung im Betrieb geringer als die notwendige Beanspruchung ist, um eine plastische Verformung von 0,2% der Torsionsträgereinrichtung zu bewirken.

9. Kondensatorvorrichtung nach einem der Ansprüche 1 bis 6, wobei die Torsionsträgereinrichtung (66a, 66b) aus einem Material mit guter elastischer Charakteristik ausgebildet ist und die Beanspruchungsniveaus der Torsionsträgereinrichtung im Betrieb geringer als die notwendige Beanspruchung ist, um eine plastische Verformung von 0,01% bis 0,0001% der Torsionsträgereinrichtung zu bewirken.

10. Kondensatorvorrrichtung nach einem der Ansprüche 1 bis 6, wobei die Torsionträgereinrichtung (66a, 66b) aus einem hochfesten Metall mit guter elastischer Charakteristik innerhalb des auf die Torsionsträgereinrichtung wirkenden Beanspruchungsbereichs ausgebildet ist.

11. Kondensatorvorrichtung nach Anspruch 1, 2 oder 3, wobei die Spanneinrichtung eine bourdonsche Röhre (48) ist, die mit zwei Windungen um eine Wicklungsachse zum Entwickeln eines Drehmoments angeordnet ist, welches keine plastische Verformung größer als 0,01% bis 0,0001% in der Torsionsträgereinrichtung (66a, 66b) bewirkt.

12. Verfahren zum Durchführen einer Messung eines Flüssigkeitsdrucks unter Verwendung einer Kondensatorvorrichtung, die ein erstes kapazitives Basisteil (38) und ein zweites kapazitives Basisteil (44) aufweist, welche jeweils Kondensatorflächen (79a, 79b und 77a, 77b) aufweisen, wobei die Kondensatorflächen von zumindest einem der kapazitiven Basisteile (38, 40) an gegenüberliegenden Seiten bezüglich einer zentralen Verlagerungsebene angeordnet sind und die Kondensatorflächen erste und zweite Kondensatoren (77a, 79a und 77b 79b) mit ersten und zweiten kapazitiven Zwischenräumen definieren, wobei das zweite kapazitive Basisteil (44) einen zentralen Bereich (65), der relativ zum ersten kapazitiven Basisteil befestigt ist, und einen äußeren Bereich (45) aufweist, der mit einer metallischen Torsionsträgereinrichtung (76a, 76b) verbunden ist, welche mit dem zentralen Bereich (65) derart verbunden ist, daß der äußere Bereich (45) bezüglich dem ersten kapazitiven Basisteil (38) in seiner Winkellage verlagert werden kann, wobei die Torsionsträgereinrichtung entlang einer Verlagerungsachse (34) angeordnet ist, wobei das zweite kapazitive Basisteil an eine bourdonsche Röhre (48) gekoppelt ist, die zu einer Wicklung um eine Wicklungsachse (107) gewunden ist, welche in Flucht mit der Verlagerungsachse (34) liegt, und wobei die Kondensatorflächen (77a, 77b) des zweiten kapazitiven Basisteiles am äußeren Bereich (45) angeordnet sind, wobei das Verfahren die Schritte aufweist:
durch ein Drehmoment bewirktes Drehen des äußeren Bereichs (45) des zweiten kapazitiven Basisteiles (44) bezüglich dem ersten kapazitiven Basisteil (38) um die Verlagerungsachse (34) durch Aufbringung eines Flüssigkeitsdrucks auf die bourdonsche Röhre (48) und Entwickeln eines Drehmoments um die Verlagerungsachse (34) und einer Winkelabweichung des äußeren Bereichs (45) um die Verlagerungsachse im Ansprechen auf den Druck, wodurch eine abhängige Veränderung in den kapazitiven Zwischenräumen des ersten und zweiten Kondensators erzeugt wird; und
Halten des Drehmoments unterhalb der Streckgrenze der Torsionsträgereinrichtung, um die dauerhafte Deformation der Torsionsträgereinrichtung zu minimieren.

13. Verfahren zum Messen einer Kapazität in einer Kondensatorvorrichtung nach Anspruch 12, wobei das Drehmoment unterhalb dem Notwendigen gehalten wird, um eine plastische Verformung von 0,2% in der Torsionsträgereinrichtung zu bewirken.

14. Verfahren zum Messen einer Kapazität in einer Kondensatorvorrichtung nach Anspruch 12 oder 13, wobei das Drehmoment unterhalb dem Notwendigen gehalten wird, um eine plastische Verformung von 0,01% bis 0,0001% in der Torsionsträgereinrichtung zu bewirken.

## Revendications

1. Dispositif formant condensateur, comprenant :
un premier élément de base capacitif (38) et un second élément de base capacitif (44) ayant respectivement des surfaces de condensateur (79a, 79b et 77a, 77b), les surfaces de condensateur de l'un au moins desdits éléments de base capacitifs (38, 44) étant espacées l'une de l'autre, lesdites surfaces de condensateur (77a, 77b) dudit second élément de base capacitif (44) et lesdites surfaces de condensateur (79a, 79b) dudit premier élément de base capacitif (38) définissant des premier et second condensateurs (77a, 79a et 77b, 79b), et les surfaces de condensateur (77a, 77b) du second élément de base capacitif (44) étant déplaçables par rapport aux surfaces de condensateur (79a, 79b) du premier élément de base capacitif (38) pour produire une variation de capacité dépendante dans lesdits premier et second condensateurs ; caractérisé en ce que
ledit second élément de base capacitif (44) comprend un moyen formant barrette de torsion (66a, 66b) situé le long d'un axe de déplacement longitudinal (34), une partie centrale (65) fixe par rapport audit premier élément de base capacitif (38) et une partie extérieure (45) reliée à ladite partie centrale (65) par ledit moyen formant barrette de torsion ; et
un moyen générateur de force (48) est couplé à ladite partie extérieure (45) dudit second élément de base capacitif (44) pour provoquer un déplacement angulaire de ladite partie extérieure (45) autour dudit axe de déplacement (34) et un déplacement des surfaces de condensateur (77a, 77b) dudit second élément de base capacitif (44) par rapport aux surfaces de condensateur (79a, 79b) dudit premier élément de base capacitif (38) pour ainsi produire ladite variation de capacité dépendante.

2. Dispositif formant condensateur selon la revendication 1, dans lequel lesdites surfaces de condensateur (77a, 77b) espacées l'une de l'autre dudit second élément de base capacitif (44) sont situées sur ladite partie extérieure (45) de celui-ci, de part et d'autre dudit axe de déplacement (34).

3. Dispositif formant condensateur selon la revendication 1 ou 2, dans lequel le moyen formant barrette de torsion (66a, 66b) a une section transversale rectangulaire avec des grande et petite dimensions par rapport audit axe de déplacement (34), et dans lequel des surfaces extérieures dudit moyen formant barrette de torsion sont placées parallèlement audit axe de déplacement et dans lequel ladite grande dimension, en l'absence d'un couple provenant dudit moyen générateur de force (48), est normale auxdites surfaces de condensateur.

4. Dispositif formant condensateur selon la revendication 1, 2, ou 3, dans lequel ledit moyen générateur de force comprend un tube de Bourdon (48) enroulé en spirale et ayant un axe de bobinage (107) qui est aligné avec ledit axe de déplacement (34).

5. Dispositif formant condensateur selon l'une quelconque des revendications précédentes, dans lequel ledit moyen formant barrette de torsion (66a, 66b), ladite partie centrale (65) et ladite partie extérieure (45) sont des parties d'un seul tenant avec ledit second élément de base capacitif (44) et sont définis par ses moyens formant fentes à parois parallèles (62, 63).

6. Dispositif formant condensateur selon l'une quelconque des revendications précédentes, dans lequel ledit moyen formant barrette de torsion comprend des premier et second éléments formant barrettes de torsion (66a, 66b).

7. Dispositif formant condensateur selon l'une quelconque des revendications précédentes, dans lequel le moyen formant barrette de torsion (66a, 66b) est réalisé à partir d'un matériau métallique très résistant ayant de bonnes caractéristiques élastiques, et dans lequel ledit moyen générateur de force (48) est conçu et disposé pour développer un couple qui ne provoque pas de déformation plastique supérieure à une valeur de 0,01 % à 0,0001 % dans ledit moyen formant barrette de torsion.

8. Dispositif formant condensateur selon l'une quelconque des revendications 1 à 6, dans lequel le moyen formant barrette de torsion (66a, 66b) est réalisé à partir d'un matériau métallique très résistant ayant de bonnes caractéristiques élastiques, et les niveaux d'effort admissible en pratique dans ledit moyen formant barrette de torsion sont inférieurs à l'effort nécessaire pour créer une déformation plastique de 0,2 % dans ledit moyen formant barrette de torsion.

9. Dispositif formant condensateur selon l'une quelconque des revendications 1 à 6, dans lequel le moyen formant barrette de torsion (66a, 66b) est réalisé à partir d'un matériau ayant de bonnes caractéristiques élastiques, et les niveaux d'effort admissible en pratique dans le moyen formant barrette de torsion sont inférieurs à l'effort nécessaire pour provoquer une déformation plastique de 0,01 % à 0,0001 % dans le moyen formant barrette de torsion.

10. Dispositif formant condensateur selon l'une quelconque des revendications 1 à 6, dans lequel le moyen formant barrette de torsion (66a, 66b) est réalisé à partir d'un métal très résistant ayant de bonnes caractéristiques élastiques à l'intérieur de la plage de contrainte subie par le moyen formant barrette de torsion.

11. Dispositif formant condensateur selon la revendication 1, 2 ou 3, dans lequel le moyen générateur de force est un tube de Bourdon (48) réalisé avec deux spires autour d'un axe de bobinage pour développer un couple qui ne provoque pas de déformation plastique supérieure à une valeur de 0,01 % à 0,0001 % dans le moyen formant barrette de torsion (66a, 66b).

12. Procédé pour fournir une mesure d'une pression de fluide en utilisant un dispositif formant condensateur qui a un premier élément de base capacitif (38) et un second élément de base capacitif (44) ayant respectivement des surfaces de condensateur (79a, 79b et 77a, 77b), les surfaces de condensateur de l'un au moins desdits éléments de base capacitifs (38, 44) étant situées sur des côtés opposés par rapport à un plan central transversal et lesdites surfaces de condensateur définissant des premier et second condensateurs (77a, 79a et 77b, 79b) ayant des premier et second écartements capacitifs, le second élément de base capacitif (44) ayant une partie centrale (65) fixe par rapport audit premier élément de base capacitif et une partie extérieure (45) reliée à un moyen formant barrette de torsion métallique (66a, 66b) relié à ladite partie centrale (65) de sorte que ladite partie extérieure (45) puisse être déplacée angulairement par rapport audit premier élément de base capacitif (38), ledit moyen formant barrette de torsion étant situé le long d'un axe de déplacement (34), le second élément de base capacitif étant couplé à un tube de Bourdon (48) enroulé en bobine autour d'un axe de bobinage (107) qui est aligné avec l'axe de déplacement (34), et lesdites surfaces de condensateur (77a, 77b) dudit second élément de base capacitif étant situées sur ladite partie extérieure (45) ; ledit procédé comprenant les étapes qui consistent à :
exercer un couple sur ladite partie extérieure (45) dudit second élément de base capacitif (44) par rapport audit premier élément de base capacitif (38) autour dudit axe de déplacement (34) par application d'une pression de fluide audit tube de Bourdon (48) et par développement d'un couple autour dudit axe de déplacement (34) et d'un déplacement angulaire de ladite partie extérieure (45) autour dudit axe de déplacement en réponse à ladite pression, pour ainsi produire une variation dépendante dans lesdits écartements capacitifs desdits premier et second condensateurs ; et à
maintenir le couple au-dessous de la limite élastique du moyen formant barrette de torsion pour minimiser la distorsion permanente dans ledit moyen formant barrette de torsion.

13. Procédé de mesure de capacité dans un dispositif formant condensateur selon la revendication 12, dans lequel le couple est maintenu au-dessous de ce qui est nécessaire pour provoquer une déformation plastique de 0,2 % dans le moyen formant barrette de torsion.

14. Procédé de mesure de capacité dans un dispositif formant condensateur selon la revendication 12 ou 13, dans lequel le couple est maintenu au-dessous de ce qui est nécessaire pour provoquer une déformation plastique de 0,01 % à 0,0001 % dans le moyen formant barrette de torsion.
